# EUROPEAN PATENT APPLICATION

(11) **EP 2 634 837 A1**
(43) Date of publication of application: **04.09.2013**
(21) Application number: 13157215.8
(22) Date of filing: 28.02.2013
(51) Int. Cl.: H01M 2/14, H01M 2/16

(54) **Separator including coating layer of organic and inorganic mixture containing polyimide, and battery including the same**

(30) Priority: 29.02.2012 KR 20120021142
(71) Applicant: Cheil Industries Inc., Gumi-si Gyeongsangbuk-do 730-030 (KR)
(72) Inventor: Hong, Ki Chul, Gyeonggi-do, 437-711 (KR); Park, Myung Kook, 437-711 Uiwang-si, Gyeonggi-do (KR); Park, Jin Kyu, 437-711 Uiwang-si, Gyeonggi-do (KR); Doh, Jae Goo, 437-711 Uiwang-si, Gyeonggi-do (KR); Chung, Jun Ho, 437-711 Uiwang-si, Gyeonggi-do (KR)
(74) Representative: Michalski Hüttermann & Partner Patentanwälte

(57) **Abstract**

Disclosed herein is a separator for batteries. The separator includes a coating layer containing polyimide and an organic binder. Specifically, a highly heat resistant polyimide capable of being easily dissolved in a low boiling point solvent and compatible with the organic binder is used as an organic binder component of the coating agent to be coated on a polyolefin base film, thereby improving heat resistance of the base film vulnerable to heat. In addition, the present disclosure provides an electrochemical battery, which includes the separator exhibiting excellent adhesion and has improved stability and lifespan.

## Description

### Field of the Invention

The present invention relates to a separator including a coating layer of an organic and inorganic mixture containing an organic binder and polyimide, and a battery including the same.

### Description of the Related Art

A separator for an electrochemical battery refers to a middle layer disposed inside a battery to isolate a positive electrode and a negative electrode from each other while maintaining ionic conductivity to permit charge and discharge of the battery.

Recently, electrochemical batteries have been developed to have a lighter and thinner structure to improve portability of electronic devices such as mobile devices and notebook computers while ensuring high output and high capacity for use in electric cars and the like. Consequently, it is necessary for a separator for batteries to have a slim thickness and a light weight while ensuring shape stability based on high heat resistance in order to produce high capacity batteries.

For example, Korean Patent No. 0775310 discloses a separator which includes a coating layer of an organic/inorganic mixture formed on one or both sides of a base film by coating inorganic particles and an organic binder polymer thereon.

When an organic binder having excellent heat resistance is used as an organic binder component of a coating agent for a separator, it can be anticipated that the coating layer can exhibit further improved thermal stability. In this case, however, the organic binder having high heat resistance is unlikely to be dissolved in a low boiling point solvent generally used for forming the coating layer and is not used in practice due to low compatibility with other components of the coating agent.

Since heat resistance of the separator is an important factor relating to stability and lifespan of a battery, there is a need for a separator including a coating layer which has excellent thermal stability through use of a heat resistant organic binder.

### Summary of the Invention

In order to solve such problems of the related art, the present inventor developed a separator which includes a coating layer formed on a base film by coating the base film with a coating agent containing polyimide and an organic binder, and exhibits excellent heat resistance.

It is an aspect of the present invention to provide a separator which employs polyimide capable of being easily dissolved in a low boiling point solvent and compatible with other components of an organic binder of a coating agent and has excellent heat resistance to achieve suppression of thermal shrinkage.

In accordance with one aspect, the present invention provides a separator which includes a coating layer formed on one or both sides of a base film using a coating agent containing polyimide, an organic binder, and a solvent, wherein the remaining amount of the solvent is 100 ppm or less.

In accordance with another aspect, the present invention provides a separator which has a solvent remaining amount of 100 ppm or less, as measured by coating one side of a base film with a coating agent containing polyimide and an organic binder, followed by drying the coating agent.

In accordance with a further aspect, the present invention provides an electrochemical battery, which includes the separator, a positive electrode, a negative electrode, and an electrolyte.

The electrochemical battery may be a lithium rechargeable battery.

According to the present invention, the separator is coated with the coating agent containing polyimide and an organic binder, which improves heat resistance of the separator to achieve suppression of thermal shrinkage of the separator.

Specifically, in the present invention, a highly heat resistant polyimide capable of being easily dissolved in a low boiling point solvent and compatible with an organic binder of a coating agent is used as an organic binder component of the coating agent to be coated on a polyolefin base film, thereby improving heat resistance of the base film that is vulnerable to heat.

Further, when applied to a battery, the separator of the present invention can prevent short circuit of electrodes by preventing thermal shrinkage of the battery upon overheating of the battery, thereby improving stability and lifespan of the battery.

### Detailed description of the Invention

Hereinafter, embodiments of the present invention will be described in more detail. Descriptions of details apparent to those skilled in the art will be omitted herein.

One aspect of the present invention provides a separator which includes a coating layer formed on one or both sides of a base film using a coating agent containing polyimide, an organic binder, and a solvent, wherein the remaining amount of the solvent is 100 ppm or less.

The polyimide may be a soluble polyimide.

Herein, the soluble polyimide refers to a polyimide which can be more easily dissolved in a low boiling point solvent having a lower boiling point than a general insoluble polyimide, and is not limited to a particular soluble polyimide. As used herein, the term 'low boiling point solvent' refers to a solvent having a boiling point of less than 150°C, and the term 'high boiling point solvent' refers to a solvent having a boiling point of 150°C or more.

When the solvent remains in excess in the dried coating layer of the separator, the coating layer exhibits low adhesion. Thus, a low boiling point solvent is used as a solvent for the coating agent in a typical coating process (particularly, dip coating).

However, a typical insoluble polyimide has a problem in that it is not dissolved in such a low boiling point solvent. Moreover, the typical polyimide has not been used as a component for the coating layer in the field of the separator due to incompatibility with expandable organic binder components, which are advantageously used together in terms of impregnation for an electrolyte of the coating layer.

In the present invention, the soluble polyimide is used as a component for the coating layer to be formed on the separator, thereby overcoming problems in the art.

As the soluble polyimide applicable to the present invention, any typical polyimide soluble in a low boiling point solvent can be used without limitation. Examples of the soluble polyimide may include fluoro-polyimide, polyether imide, and the like. Particularly, the fluoro-polyimide may be a tri-fluoromethyl group containing polyimide. Since the tri-fluoromethyl group has a bulky structure to enlarge a free volume, the tri-fluoromethyl group containing polyimide can be more easily dissolved in the low boiling point solvent.

In some embodiments, the tri-fluoromethyl group containing polyimide may include compounds represented by Formula 1 or 2.

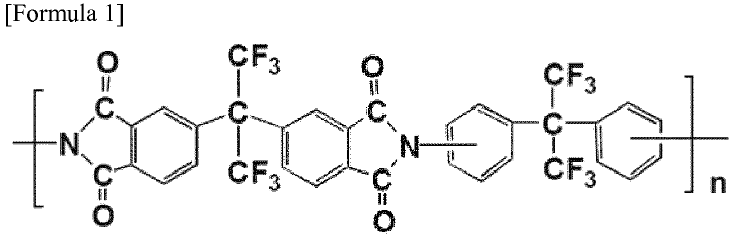

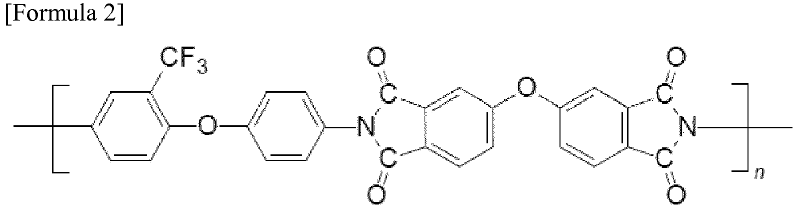

In some embodiments, the polyether imide may include compounds represented by Formula 3.

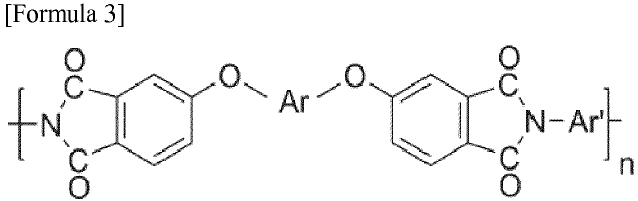

In Formula 3, Ar may include compounds represented by Formulae (a), (b), and (c), and Ar' may include compounds represented by Formulae (x), (y) and (z).

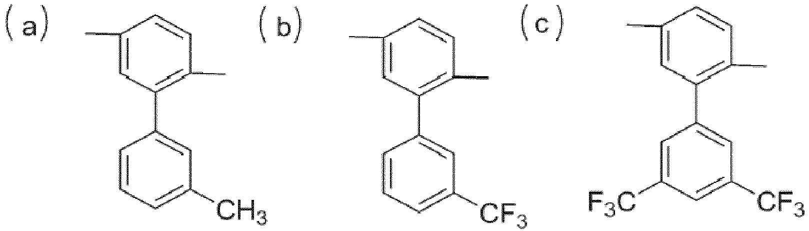

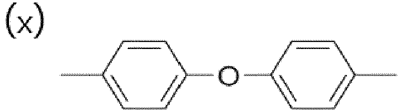

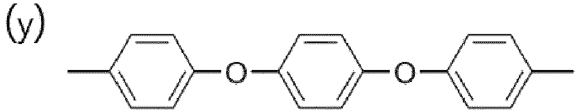

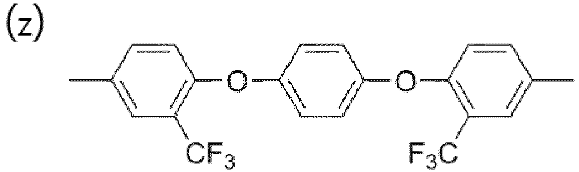

According to the present invention, the organic binder may be an expandable organic binder.

Herein, the expandable organic binder refers to an organic binder component that is used as a component of the coating layer to enlarge an electrolyte supplementing capability of the separator and exhibits expandable properties with respect to the electrolyte.

As typically used in the art, any kind of expandable organic binder having electrochemical stability and affinity with battery electrolytes may be used without limitation as the expandable organic binder according to the present invention.

Examples of the expandable organic binder may include polyvinylidene fluoride-hexafluoropropylene copolymers, perfluoropolymer, polyvinyl chloride or polyvinylidene chloride and copolymers thereof, polyethylene glycol derivatives including polyethylene glycol dialkylether and polyethylene glycol dialkylester, poly oxides including poly(oxymethylene-oligo-oxyethylene), polyethylene oxides and polypropylene oxides, polyacrylonitrile copolymers including polyvinylacetate, poly(vinylpyrrolidone-vinylacetate), polystyrene and polystyrene acrylonitrile copolymers, polyacrylonitrile, polyacrylonitrile methylmethacrylate copolymers, polymethylmethacrylate or polymethylmethacrylate copolymers, and the like. These may be used alone or in combination thereof.

According to the present invention, the expandable organic binder may be a polyvinylidene fluoride-hexafluoropropylene copolymer.

According to the present invention, the polyvinylidene fluoride-hexafluoropropylene copolymer may have a weight average molecular weight of 600,000 g/mol or more to 800,000 g/mol or less, more preferably 600,000 g/mol or more to 750,000 g/mol or less.

Within this molecular weight range of the polyvinylidene fluoride-hexafluoropropylene copolymer, the separator allows excellent electrolyte impregnation, so that a battery including the separator can achieve efficient output of electricity.

In the polyvinylidene fluoride-hexafluoropropylene copolymer used in the present invention, although the content of each of polyvinylidene fluoride and hexafluoropropylene is not particularly limited, hexafluoropropylene may be present in an amount of 0.1 or more to 40 % or less by weight based on the total weight of the copolymer.

The coating layer may further include the inorganic particles.

According to the present invention, the inorganic particles may be selected from the group consisting of Al₂O₃, SiO₂, B₂O₃, Ga₂O₃, TiO₂ and SnO₂, without being limited thereto. These may be used alone or in combination thereof.

Preferably, the inorganic particles are Al₂O₃ particles.

Although not particularly limited to a certain average particle size, the inorganic particles preferably have an average particle size from 1 nm or more to 2,000 nm or less, more preferably from 100 nm or more to 1,000 nm or less. Within this size range, the inorganic particles can prevent deterioration in coating processibility and dispersion within the coating agent, deterioration in mechanical properties, and increase in electric resistance by allowing suitable thickness adjustment of the coating layer through increase in density of the coating layer. Further, pores of a suitable size can be created in the coating layer, thereby lowering the likelihood of internal short circuit upon charge and discharge of the battery.

According to the present invention, the coating agent of the organic and inorganic mixture contains the polyimide and the organic binder as organic binder polymer resins, and the inorganic particles. The coating agent may further contain suitable solvents and other additives.

Although not particularly limited to a certain ratio in the coating layer of the organic and inorganic mixture, the coating layer may contain: 5 or more to 10 or less parts by weight of the polyimide; 5 or more to 20 or less parts by weight of the organic binder; and 70 or more to 90 or less parts by weight of the inorganic particles, based on 100 parts by weight of the coating layer.

Within these ranges, the polyimide can provide improved heat resistance and adhesion, the inorganic particles can provide improved heat dissipation, and the organic binder can permit sufficient impregnation of the electrolyte, whereby the coating layer can be formed in a relatively flat shape by preventing deterioration in coating processibility and dispersion of the coating agent.

In preparation of the coating agent used in the present invention, the polyimide, the organic binder, and the inorganic particles may be dissolved in suitable solvents, respectively, and mixed with each other.

For example, the polyimide and the organic binder, for example, a polyvinylidene fluoride-hexafluoropropylene copolymer, may be prepared as polymer solutions, which are obtained by dissolving the polyimide and the polyvinylidene fluoride-hexafluoropropylene copolymer in acetone. Further, the inorganic particles may be prepared as an inorganic dispersant, which is obtained by dissolving the inorganic particles in acetone.

The polymer solutions and the inorganic dispersant may be mixed in a suitable solvent to prepare a coating agent.

Examples of solvents used in the present invention may include ketones such as acetone, or alcohols such as methanol, ethanol, isopropyl alcohol, and the like, without being limited thereto. These solvents provide an advantage of allowing easy removal upon drying after coating.

According to the present invention, the coating agent may be prepared in the form of a mixture obtained by sufficiently stirring the polymer solutions, the inorganic dispersant and the solvent using a ball mill, a bead mill or a screw mixer.

The separator of the present invention may be prepared by coating the coating agent on one or both sides of a base film, followed by drying the coating agent.

Any typical coating method known in the art may be used without limitation in order to coat the base film with the coating agent. For example, dip coating, die coating, roll coating, or comma coating may be used. These coating processes may be used alone or in combination thereof.

Preferably, the coating layer of the separator is formed by dip coating.

According to the present invention, the coating layer of the organic and inorganic mixture preferably has a thickness of 0.01 µm or more to 20 µm or less, more preferably 1 µm or more to 15 µm or less. Within this thickness range, the coating layer can be formed to a suitable thickness to have excellent thermal stability and adhesion, and can prevent the separator from being excessively thickened, thereby preventing increase in internal resistance of the battery.

A term of "loading amount of coating agent (or coating layer)" means a weight per unit area of the coating layer.

According to the present invention, the base film may be a polyolefin base film.

The polyolefin base film may be selected from the group consisting of a polyethylene monolayer film, a polypropylene monolayer film, a polyethylene/polypropylene bilayer film, a polypropylene/polyethylene/polypropylene triple-layer film, and a polyethylene/polypropylene/polyethylene triple-layer film.

The polyolefin base film preferably has a thickness of 1 µm or more to 40 µm or less, more preferably 1 µm or more to 25 µm or less. Within this thickness range of the base film, the separator can be formed to a suitable thickness, thereby preventing short circuit of the positive electrode and the negative electrode while improving stability of the battery. If the thickness of the separator exceeds this range, there is a problem of increase in internal resistance of the battery.

The separator comprising the coating layer of the organic and inorganic mixture may have a thermal shrinkage of 30% or less in a machine direction (MD) or in a transverse direction (TD), as measured after leaving the separator at 150°C for 1 hour. Within this range, the separator can effectively prevent short circuit of the electrodes, thereby improving stability of the battery.

Here, any typical method known in the art may be used without limitation to measure the thermal shrinkage of the separator.

For example, the thermal shrinkage of the separator can be measured as follows: a prepared separator is cut into a size of about 5 cm (width) × about 5 cm (length) and left in a chamber at 150°C for 1 hour, followed by measuring degrees of shrinkage in MD and TD directions to calculate thermal shrinkage.

In some embodiments of the present invention, the separator may have an electrolyte wettability of 80 seconds or less.

Herein, the electrolyte wettability refers to a period of time from a time point of leaving a separator having a predetermined size (for example, a circular separator specimen having an outer diameter of 18 mm) on a surface of an electrolyte in a beaker to a time point when the separator is completely wet by the electrolyte.

As the electrolyte of the battery according to the present invention, any typical electrolyte for electrochemical batteries known in the art may be used without limitation. The electrolyte may be obtained through dissolution or dissociation of a salt having, for example, a structure of A⁺ B⁻ in an organic solvent. Examples of the A⁺ component, that is, cation, may include alkali metal cations such as Li⁺, Na⁺ or K⁺, and combinations thereof, without being limited thereto. Examples of the B⁻ component, that is, anion, may include PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻, and combinations thereof, without being limited thereto. In some embodiments of the present invention, the separator may have a remaining solvent amount of 100 ppm or less. Herein, the remaining solvent amount of 100 ppm or less technically does not means a numerical value of 0 or less and is a positive value that exceeds 0 and is less than or equal to 100 ppm. Particularly, the remaining amount of the solvent may exceed 10 ppm and may be less than or equal to 100 ppm.

The remaining solvent amount may be measured by depositing the coating agent of the organic and inorganic mixture containing the polyimide and the organic binder on one side of the base film, followed by drying at temperatures of 90°C to 120°C for 5 seconds to 2 minutes, more preferably at 100°C for 10 seconds.

When the remaining solvent amount in the separator is 100 ppm or less, it is possible to prevent various problems caused by excess of the solvent remaining in the separator, that is, insufficient demonstration of adhesion by the organic binder component, insufficient suppression of thermal shrinkage of the base film due to deterioration in adhesion of the coating layer, short circuit between electrodes upon overheating of the battery due to deterioration in performance of the battery upon charge and discharge of the battery, and the like.

In accordance with another aspect, the present invention provides a separator having a solvent remaining amount of 100 ppm or less, as measured by coating one side of a base film with a coating agent containing polyimide and an organic binder, and drying the coating agent at 100°C for 10 seconds.

In accordance with a further aspect, the present invention provides an electrochemical battery, which includes the polyolefin porous separator including the coating layer of the organic and inorganic mixture, a positive electrode, and a negative electrode, and which is filled with an electrolyte.

Any type of electrochemical battery known in the art may be used without limitation.

Examples of the electrochemical battery of the present invention may include lithium rechargeable batteries, such as lithium metal rechargeable batteries, lithium ion rechargeable batteries, lithium polymer rechargeable batteries, lithium ion polymer rechargeable batteries, and the like.

Any typical method known in the art can be used without limitation in manufacture of the electrochemical battery according to the present invention.

For example, the electrochemical battery according to the present invention may be manufactured by placing the polyolefin separator including the coating layer of the organic and inorganic mixture according to the present invention between a positive electrode and a negative electrode, and filling a space therebetween with an electrolyte.

The electrodes of the electrochemical battery according to the present invention may be prepared in the form of assemblies of electrode active materials and current collectors, which are combined by a typical method used in the art.

As the positive active material of the battery according to the present invention, any positive electrode active material known in the art may be used without limitation.

Examples of the positive electrode active material may include lithium manganese oxides, lithium cobalt oxides, lithium nickel oxides, lithium iron oxides, and lithium composite oxides thereof, without being limited thereto.

Further, as the negative electrode active material of the battery according to the present invention, any negative electrode active material known in the art may be used without limitation.

Examples of the negative electrode active material may include lithium metal, lithium alloys, lithium adsorption materials such as carbon, petroleum coke, activated carbon, graphite and other carbonous materials, and the like.

As the current collector of the battery according to the present invention, any typical current collector known in the art may be used without limitation.

Examples of a positive electrode current collector may include aluminum foils, nickel foils, and combinations thereof, without being limited thereto.

Examples of a negative electrode current collector may include copper foils, gold foils, nickel foils, copper alloy foils, and combinations thereof, without being limited thereto.

As the electrolyte of the battery according to the present invention, any typical electrolyte for electrochemical batteries known in the art may be used without limitation.

The electrolyte may be obtained through dissolution or dissociation of a salt having, for example, a structure of A⁺B⁻ in an organic solvent.

Examples of the A⁺ component, that is, cation, may include alkali metal cations such as Li⁺, Na⁺ or K⁺, and combinations thereof, without being limited thereto.

Examples of the B⁻ component, that is, anion, may include PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻, and combinations thereof, without being limited thereto.

Examples of the organic solvent may include propylene carbonate (PC), ethylene carbonate (EC), diethylcarbonate (DEC), dimethylcarbonate (DMC), dipropylcarbonate (DPC), dimethylsulfoxide, acetonitrile, dimethoxyethane, diethoxyethane, tetrahydrofuran, N-methyl-2-pyrrolidone (NMP), ethylmethylcarbonate (EMC), γ-butyrolactone, and the like. These may be used alone or in combination thereof.

Next, the present invention will be described in more detail with reference to some examples. However, it should be understood that the following examples are provided for illustration only and are not to be construed in any way as limiting the present invention.

### Example 1 and Comparative Examples 1 to 3

### Preparation of separator including coating layer containing soluble polyimide

### Example 1

### (1) Preparation of coating agent

1) A polyvinylidene fluoride-hexafluoropropylene ('PVdF-HFP') copolymer (21216, Solvay) having a weight average molecular weight of 700,000 g/mol was added in an amount of 10 wt% to acetone (Daejung Chemicals & Metals), followed by stirring at 25°C for 4 hours using a stirrer to prepare a first polymer solution.
2) A polyimide (Cheil Industries) having a weight average molecular weight of 50,000 g/mol was added in an amount of 10 wt% to acetone (Daejung Chemicals & Metals), followed by stirring at 25°C for 4 hours using a stirrer to prepare a second polymer solution.
3) Al₂O₃ particles (LS235, Nippon Light Metal Company) were added in an amount of 25 wt% to acetone (Daejung Chemicals & Metals), followed by milling for dispersion at 25°C for 3 hours using a bead mill to prepare an inorganic dispersant.

The prepared first polymer solution, second polymer solution and inorganic dispersant were mixed in a ratio of first polymer solution : second polymer solution : inorganic dispersant : solvent (acetone) of 1.8:0.2:3:6, and stirred at 25°C for 2 hours using a power mixer to prepare a coating agent.

### (2) Preparation of separator

The prepared coating agent was deposited on both sides of a 9 µm thick polyethylene monolayer base film by dip coating and dried at a temperature of 100°C for 10 seconds to prepare a separator.

### Example 2

A separator was prepared in the same manner as in Example 1 except that the coating agent was prepared by mixing the first polymer solution, the second polymer solution, the inorganic dispersion and solvent (acetone) in a ratio of 1.4:0.4:3:6 in (1) of Example 1.

### Example 3

A separator was prepared in the same manner as in Example 1 except that the coating agent was prepared by mixing the first polymer solution, the second polymer solution, the inorganic dispersion and solvent (acetone) in a ratio of 1:1:3:6 in (1) Example 1.

### Comparative Example 1

### Preparation of separator including coating layer containing insoluble polyimide

Although an insoluble polyimide was used instead of the soluble polyimide for preparing the second polymer solution in (1) of Example 1, the insoluble polyimide was not dissolved in acetone. As a result, the coating agent could not be prepared.

### Comparative Example 2

### Preparation of separator including coating layer free from soluble polyimide

### (1) Preparation of coating agent

1) A polyvinylidene fluoride-hexafluoropropylene ('PVdF-HFP') copolymer (21216, Solvay) having a weight average molecular weight of 700,000 g/mol was added in an amount of 10 wt% to acetone (Daejung Chemicals & Metals), followed by stirring at 25°C for 4 hours using a stirrer to prepare a first polymer solution.
2) Al₂O₃ particles (LS235, Nippon Light Metal Company) were added in an amount of 25 wt% to acetone (Daejung Chemicals & Metals), followed by milling for dispersion at 25°C for 3 hours using a bead mill to prepare an inorganic dispersant.

The prepared first polymer solution and inorganic dispersant were mixed in a ratio of first polymer solution : inorganic dispersant : solvent (acetone) of 2:3:6, and stirred at 25°C for 2 hours using a power mixer to prepare a coating agent.

### (2) Preparation of separator

The prepared coating agent was deposited on both sides of a 9 µm thick polyethylene monolayer base film by dip coating and dried to prepare a separator.

### Comparative Example 3

### Preparation of separator including coating layer free from PVdF-HFP copolymer

A separator was prepared in the same manner as in Example 1 except that a polyvinylidene fluoride homopolymer (5130, Solvay) was added in an amount of 10 wt% to DMF (Daejung Chemicals & Metals) to prepare a first polymer solution in (1) of Example 1 in (1) of Example 1.

### Experimental Example 1

### Measurement of thickness and loading amount of coating layer

The thickness and loading amount of each of the coating layers prepared in Examples 1 to 3 and Comparative Examples 2 and 3 were measured as follows.

First, the thickness of each coating layer was measured using an SEM cross section image and a microcaliper.

Then, each of the coating layers was cut into 10 cm (MD) × 20 cm (TD) pieces to prepare specimens, each weight of which was measured using an electronic scale, followed by calculating the loading amount of the coating agent.

The calculation results of the thicknesses and the loading amounts are listed in Table 1.

### Experimental Example 2

### Measurement of thermal shrinkage of separator

Each of the separators prepared in Examples 1 to 3 and Comparative Examples 2 and 3 was cut into 5 cm (MD) x 5 cm (TD) pieces to prepare a total of 5 specimens. Each of the specimens was left in a chamber at 150°C for 1 hour, followed by measuring degrees of shrinkage of each specimen in MD and TD directions to calculate thermal shrinkage.

Measurement results of the thermal shrinkage are listed in Table 1.

### Experimental Example 3

### Measurement of electrolyte wettability

Each of the separators prepared in Examples 1 to 3 and Comparative Examples 2 and 3 was cut into circular pieces each having an outer diameter of 18 Φ to prepare a total of 5 specimens. Then, each specimen was placed on the surface of the electrolyte in a beaker until the specimen was completely wet by the electrolyte. Here, a period of time from a time point of placing the specimen on the surface of the electrolyte to a time point when the specimen was completely wet by the electrolyte was measured.

Periods of time taken for wetting the specimens by the electrolyte are listed in Table 1.

**Table 1**

| | Thickness of coating layer (µm) | Loading amount (g/m²) | Thermal shrinkage of separator (%) | | Electrolyte Wettability (sec) |
|---|---|---|---|---|---|
| | | | TD | MD | |
| Example 1 | 4.5 | 7.9 | 9.5 | 15.0 | 63 |
| Example 2 | 4.4 | 8.1 | 8.5 | 12.5 | 51 |
| Example 3 | 4.6 | 8.2 | 7.0 | 9.5 | 32 |
| Comparative Example 2 | 4.3 | 8.1 | 21.5 | 25.0 | 85 |
| Comparative Example 3 | 4.6 | 8.3 | 5.0 | 7.0 | 187 |

As shown in Table 1, the separators of Examples 1 to 3 each including the coating layer containing the soluble polyimide had lower thermal shrinkage than the separators of Comparative Example 2 including the coating layer free from the soluble polyimide. Thus, it can be confirmed that the separators of Examples 1 to 3 have improved thermal stability.

Further, in Comparative Example 3 wherein the PVdF-HFP copolymer was not used under the same conditions as in Example 1, it was determined that the separator had significantly deterioration in electrolyte wettability and could not be used for a battery.

### Experimental Example 4

### Measurement of remaining amount of solvent in separator

Each of the separators prepared in Examples 1 to 3 was analyzed through gas-chromatography (HP-6890) under conditions as listed in Table 2 to measure the amount of the solvent remaining in the separator.

**Table 2**

| Parameter | Condition |
|---|---|
| Column | Front: HP-INNOWax (length 30 M, ID 0.53 mm, Film thickness 1.00 µm) |
| | Back: HP-1 (length 30 M, ID 0.53 mm, Film thickness 0.88 µm) |
| Temperature and time | 40°C (4 min) → 20°C/min → 250°C (4min) |
| Flow rate | 10 mL/min |
| Injector | S/SL Injector |
| Split ratio | 5 : 1 |
| Detector | FID |
| Injection volume | 1 µℓ |
| Injector temperature | 200°C |

According to results of the gas-chromatography, the remaining amount of acetone in each of the separators prepared in Examples 1 to 3 was less than about 50 ppm.

Although some embodiments have been disclosed herein, it should be understood that these embodiments are provided by way of illustration only, and that various modifications, changes, and alterations can be made without departing from the spirit and scope of the invention. Therefore, the scope of the invention should be limited only by the accompanying claims and equivalents thereof.

## Claims

1. A separator comprising a coating layer formed on one or both sides of a base film using a coating agent containing polyimide, an organic binder, and a solvent,
wherein a remaining amount of the solvent is 100 ppm or less in the separator.

2. The separator according to claim 1, wherein the base film is a polyolefin film.

3. The separator according to claim 1 or 2, wherein the polyolefin base film is one selected from the group consisting of a polyethylene monolayer film, a polypropylene monolayer film, a polyethylene/polypropylene bilayer film, a polypropylene/polyethylene/polypropylene triple-layer film, and a polyethylene/polypropylene/polyethylene triple-layer film.

4. The separator according to any of the claims 1 to 3, wherein the polyimide comprises a soluble polyimide.

5. The separator according to any of the claims 1 to 4, wherein the polyimide contains a tri-fluoromethyl group.

6. The separator according to any of the claims 1 to 5, wherein the organic binder comprises an expandable organic binder.

7. The separator according to any of the claims 1 to 6, wherein the expandable organic binder comprises a polyvinylidene fluoride-hexafluoropropylene copolymer.

8. The separator according to any of the claims 1 to 7, wherein the coating layer further comprises inorganic particles.

9. The separator according to any of the claims 1 to 7, wherein the inorganic particles comprise at least one selected from the group consisting of Al₂O₃, SiO₂, B₂O₃, Ga₂O₃, TiO₂ and SnO₂ particles.

10. The separator according to any of the claims 1 to 9, wherein the coating layer is formed by dip coating.

11. The separator according to to any of the claims 1 to 10, wherein the separator has a thermal shrinkage of 30% or less in a machine direction (MD) or in a transverse direction (TD), as measured after leaving the separator at 150°C for 1 hour.

12. The separator according to any of the claims 1 to 11, wherein the separator has a wettability of 80 seconds or less.

13. An electrochemical battery comprising a positive electrode, a negative electrode, an electrolyte, and the separator according to any of the claims 1 to 12.

14. The electrochemical battery according to claim 13, wherein the electrochemical battery is a lithium rechargeable battery.
